# EUROPÄISCHE PATENTSCHRIFT

(11) **EP 2 082 853 B1**
(45) Veröffentlichungstag und Bekanntmachung des Hinweises auf die Patenterteilung: **26.01.2011**
(21) Anmeldenummer: 08021503.1
(22) Anmeldetag: 11.12.2008
(51) Int. Cl.: B25J 17/02, B23P 19/00, B25J 15/04, B25J 19/00, B23B 31/107, B23B 31/117

(54) **Ausgleichselement für eine Positioniereinrichtung**
Compliance device for a positioning device
Dispositif de conformité pour un dispositif de positionnement

(30) Priorität: 20.10.2008 DE 102008052157; 23.01.2008 DE 102008005790
(43) Veröffentlichungstag der Anmeldung: 29.07.2009
(73) Patentinhaber: R+W Antriebselemente GmbH, 63911 Klingenberg (DE)
(72) Erfinder: Rimpel, Andreas, 63933 Mönchberg (DE)
(74) Vertreter: Säger, Manfred

(56) Entgegenhaltungen:
- EP-A- 0 036 912
- EP-A- 0 083 410
- EP-A- 0 445 404
- EP-A- 0 913 587
- WO-A-2005/049259
- WO-A1-2009/034795
- DE-A1- 2 113 980
- DE-A1- 2 835 712
- DE-A1- 3 518 581
- DE-A1- 3 822 435
- DE-A1- 19 608 416
- DE-B- 1 008 966
- FR-A- 2 360 379
- GB-A- 2 273 326
- US-A- 4 179 783
- US-A- 4 661 037
- US-A- 4 791 588
- US-A- 4 955 655
- US-A- 5 619 782
- US-B1- 6 408 531

## Beschreibung

Die Erfindung betrifft ein bekanntes gattungsgemässes Ausgleichselement nach dem Oberbegriff des Hauptanspruchs.

Ein solches Ausgleichselement ist in Form eines Kreuzschlittens bekannt. Es dient zum Einbau zwischen dem Arm eines Industrieroboters oder dgl. Manipulationsgerät als Positioniereinrichtung und dessen Greifer als anzubauendes Gerät. Industrieroboter übernehmen im zunehmendem Masse eine höhere Genauigkeit verlangende spezielle Montageaufgaben, bei denen es notwendig ist, dass das Gerät in Form des Greifers wegen Ungenauigkeiten beim Positionieren ein leichter Versatz in lateraler Richtung der X-Y-Ebene ausgleichen können muss, wobei sich die Höhe, d.h. der Abstand der Grund- von der Anbauplatte allenfalls nur geringfügig ändern darf. Bislang sind zu diesem Zweck u.a. bekannte Kreuzschlitten eingesetzt worden, die aber mit Nachteilen behaftet, nämlich einerseits teuer in der Anschaffung, andererseits nicht spiel- und verschleissfrei sind.

Ein gattungsgemässes, aber gross bauendes Ausgleichselement nach dem Oberbegriff des Hauptanspruchs ist bekannt (EP 0 036 912 A1).

Der Erfindung liegt die Aufgabe zugrunde, ein gattungsgemässes Ausgleichselement nach dem Oberbegriff des Hauptanspruchs billiger sowie spiel- und verschleissfreier auszubilden.

Diese Aufgabe wird bei einem gattungsgemässen Ausgleichselement nach dem Oberbegriff des Hauptanspruchs erfindungsgemäss durch dessen kennzeichnende Merkmale gelöst.

Durch diese Ausbildung wird die Zwischenplatte an der Grundplatte nach Art eines Parallelogramms ebenso wie die Anbauplatte an der Zwischenplatte, jedoch um eine Rechten Winkel um die Z-Achse gedreht angelenkt. Infolge dieser Ausbildung kann das Gerät in Form des Greifers bei ungenauem Positionieren einen leichten Versatz in lateraler Richtung der X-Y-Ebene, aber ohne Winkelversatz ausgleichen, wobei sich die Höhe allenfalls nur geringfügig verändert.

Es werden also nur Federkräfte benötigt, um die beiden Paare von X- sowie Y-Führungsplatten in der Grundstellung ohne Ausgleich in X- bzw. in Y-Richtung zu halten. Hierdurch bedingt ist es auf überraschend einfache Weise mäglich, das Ausgleichselement billiger sowie spiel- und verschleissfreier bei zugleich höchster Genauigkeit beim nur lateralen Ausgleich in der X-Y-Ebene auszubilden.

Es wird erfindungsgemäß eine besonders kompakte Ausführungsform des Ausgleichselements erreicht, da die Zwischenplatte von der Grundplatte in positiver Z-Richtung und die Anbauplatte bezüglich der Zwischenplatte in negativer Z-Richtung benachbart, jedoch mit Abstand zu der Grundplatte angeordnet ist, die Zwischenplatte eine Öffnung aufweist und wedan bis zu dieser eine auf der der Zwischenplatte zugewandten Seite der Anbauplatte festgelegte Verlängerung reicht.

Weitere zweckmässige Ausgestaltungen und Weiterbildungen der Erfindung sind in den Unteransprüchen gekennzeichnet.

Ein Ausführungsbeispiel der Erfindung wird nachfolgend unter Bezugnahme auf die Zeichnung näher erläutert. In dieser zeigt:
- Figur 1: eine nicht beanspruchte Auführungsform einer Ausgleichselements in montiertem Zustand an einem Industrieroboter;
- Figur 2: die prinzipielle Wirkungsweise des Ausgleichselements schematisch dargestellt;
- Figur 3: den prinzipiellen Aufbau des Aus- gleichselements, schematisch dargestellt;
- Figur 4: den prinzipiellen Aufbau der erfindungsgemässen Ausführungsform;
- Figur 5: die Ausführungsform, in perspektivischer Draufsicht und
- Figur 6: die Ausführungsform, in perspektivischer Druntersicht.

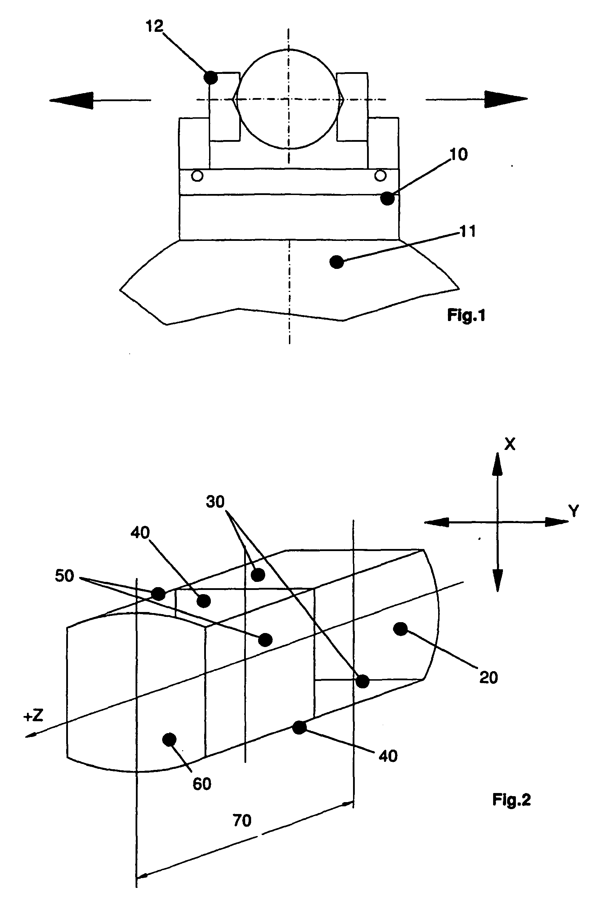

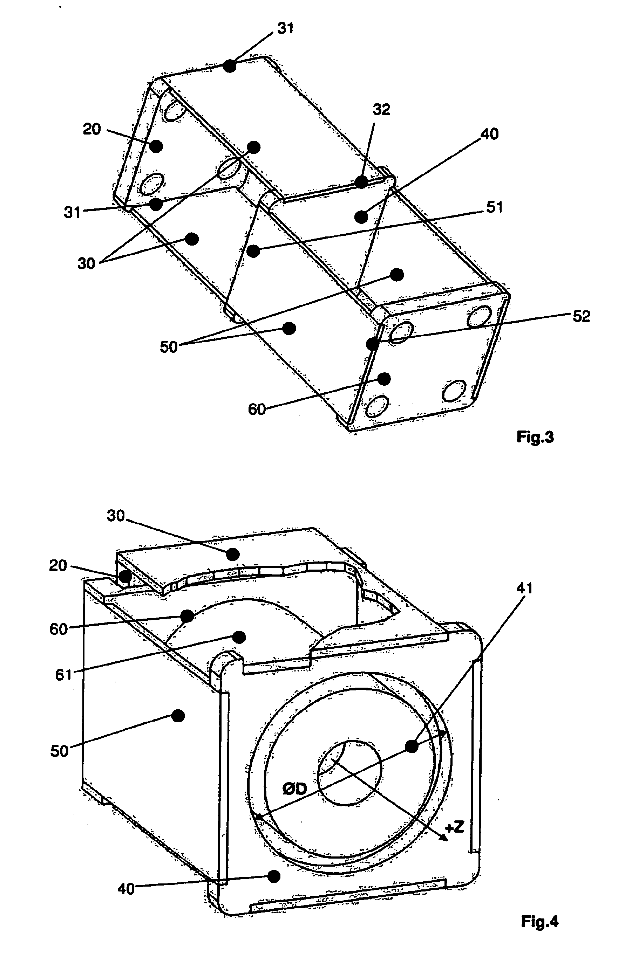

Aus Figur 1 ist schematisch der Einbau eines Ausgleichselementes 10 zwischen einer als Arm eines Industrieroboters ausgebildeten Positioniereinrichtung 11 und einem Greifer 12 als anzubauendes Gerät dargestellt, wobei sich der prinzipielle Aufbau dieser nicht beanspruchten Ausführungsform des Ausgleichselements 10 aus Figur 3 ergibt.

Dieses Ausgleichselement 10 ist mit einer mittels des Arms 11 ausrichtbaren Grundplatte 20 sowie einer dazu parallel geführten Anbauplatte 60 für den Anbau des Greifers 12 zum selbsttätigen Ausgleich von Ungenauigkeiten bei der Positionierung innerhalb der X-Y-Ebene der Anbauplatte 60 in X- sowie in der dazu rechtwinklig verlaufenden Y-Richtung ohne Winkelversatz versehen. Es weist ferner eine Zwischenplatte 40 auf.

Diese Zwischenplatte 40 ist bezüglich der Grundplatte 20 --in sowohl zu der X- als auch zu der Y-Richtung rechtwinkligen (positiven) Z-Richtung von dieser Grundplatte 20-- beabstandet angeordnet. Zusätzlich ist die Zwischenplatte 40 über ein Paar zueinander paralleler X-Führungsplatten 30 nur in der X-Richtung beweglich geführt, die mit ihren Enden sowohl an der Grundplatte 20 als auch der Zwischenplatte 40 festgelegt sind. Ebenso ist die Zwischenplatte 40 mit der Anbauplatte 60 über ein Paar voneinander beabstandeter, zueinander paralleler Y-Führungs- platten 50 nur in Y-Richtung geführt, die mit ihren Enden sowohl an der Anbauplatte 60 als auch der Zwischenplatte 40 festgelegt sind.

Beim wiedergegebenen nicht beanspruchten Ausführungsbeispiel sind die X-und die Y-Führungsplatten 30 bzw. 50 an der Grundplatte 20 bzw. an der Anbauplatte 60 sowie der Zwischenplatte 40 längs zueinander paralleler Teilanlageflächen 31,32 bzw. 51,52 festgelegt und federelastisch als Blattfedern ausgebildet, wobei zweckmässigerweise die Teilanlageflächen der Blattfedern 30, 40 der betreffenden Platte 20 bzw. 60 rechtwinklig zu dieser sowie auch rechtwinklig zu der Erstreckung der Zwischenplatte 40 ausgerichtet sind. Diese Ausgestaltung gestattet, dass die X-Führungsplatten 30 bezüglich der Grundplatte 20 und die Y-Führungsplatten 50 bezüglich der Anbauplatte 50 sowie der Zwischenplatte 40 jeweils mittels der Kraft der Blattfedern in rechtwinkliger Ausrichtung als Grundstellung ohne Ausgleich in die X- bzw. in die Y-Richtung gehalten sind.

Durch diese Ausbildung des Ausgleichselements 10 wird, wie die schematisch in Figur 2 dargestellte Wirkungsweise zeigt, die Zwischenplatte 40 an der Grundplatte 20 nach Art eines Parallelogramms ebenso wie die Anbauplatte 60 an der Zwischenplatte 40, jedoch um eine Rechten Winkel um die Z-Achse gedreht, angelenkt. Infolge dieser Ausbildung kann das an der Anbauplatte 60 festgelegte Gerät in Form des Greifers bei ungenauem Positionieren des im Abstand 70 (Höhe des Ausgleichselementes) von der Grundplatte 20 entfernten Anbauplatte 20 mit dem daran montierten Arm einen leichten Versatz in lateraler Richtung der X-Y-Ebene, aber ohne Winkelversatz ausgleichen, wobei sich die Höhe allenfalls nur geringfügig verändert.

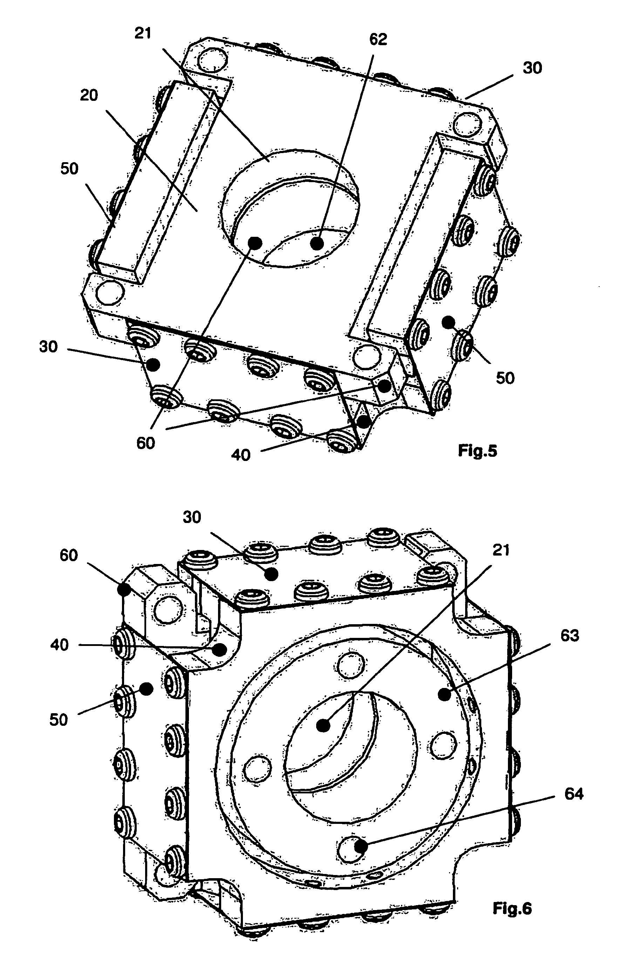

In den Figuren 4 bis 6 sind verschiedene Ansichten einer erfindungsgemäßen kompakten Ausführungsform gezeigt. Hierbei weist die Zwischenplatte 40 eine -kreisrunde- Öffnung 51 auf und ist die Zwischenplatte 40 von der Grundplatte 20 in positiver Z-Richtung und die Anbauplatte 60 bezüglich der Zwischenplatte 40 in negativer Z-Richtung benachbart, jedoch mit Abstand zu der Grundplatte 20 angeordnet. Auf der der Zwischenplatte 40 zugewandten Seite der Anbauplatte 60 ist eine als Hohlzylinder 61 ausgebildete Verlängerung festgelegt, z.B. angeschweist, die bis zu und durch die Öffnung 51 der Zwischenplatte 40 hindurch reicht und die -oder die Anbauplatte 60- für den leichten Anschluss an den Geber 12 auf ihrer Aussenseite ein Schraubgewinde aufweist. An ihrem Ende ist sie mit einem Flansch 63 mit gleichmässig am Umfang verteilt angeordneten Gewindlöchern 64 versehen (Figur 6). Auch die Anbauals auch die Grundplatte können mit Öfnnungen 62 bzw. 21 versehen sein, wie Figur 5 zeigt.

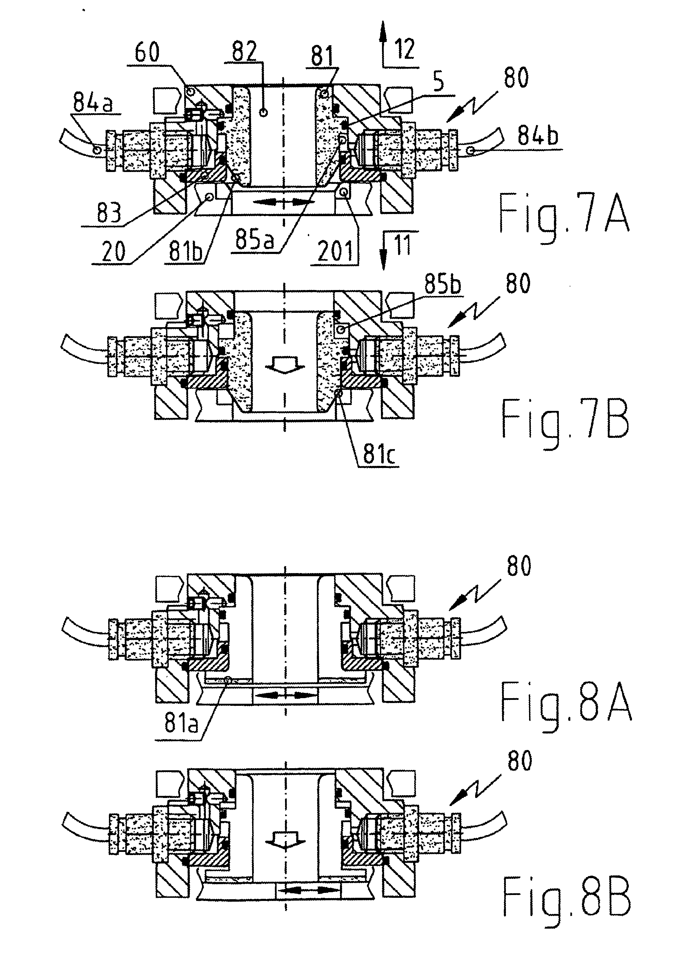

Es ist zwischen der Positioniereinrichtung 11 und der Grundplatte 20 des Ausgleichselementes 10 eine diese starr bezüglich der Positioniereinrichtung 11 fixierende Fixiereinrichtung 80 vorgesehen, die einen hydraulisch oder pneumatisch betätigbaren, doppeltwirkenden von einer Freigabelage (Fig. 7A, 8A, 9A und 9B) in eine Fixierlage (Fig. 7B, Fig. 8B) der Grundplatte 20 bewegbaren Kolben 81 aufweist, der als Hohlzylinder einen mittigen Durchlass 82 z.B. für Kabel od. dgl. aufweist und der zum Teil in der Fixiereinrichtung 80 selbst und zum Teil an den Führungsflächen einer Buchse 83 geführt ist.

Die Fixiereinrichtung weist für den hydraulisch oder pneumatisch betätigbaren Kolben 81 zu dessen Doppelwirkung zwei Anschlüsse 84a, 84b und der Kolben 81 zwischen den geführten Bereichen mittels der Führungsflächen einen aussen umlaufenden Bund 5 unter Bildung zweier Kammern 85a,85b auf, von denen die eine 85a,85b mit dem einen Anschluss 84a bzw. 84b zwecks Bewegung von der Freigabelage (Fig. 7A, 8A, 9A und 9B) in die Fixierlage (Fig. 7B, Fig. 8B) bei Beaufschlagung des einen Anschlusses 84a,84b mit Druck und umgekehrt bei Beaufschlagung des anderen Anschlusses 84b,84a verbunden ist.

Bei einer Ausführungsform weist der Kolben 81 an seiner der Grundplatte 20 zugewandten Seite einen diese reibungsschlüssig fixierenden Reibbelag 81a (Fig. 8A) auf. In dazu alternativer Ausgestaltung ist der Kolben 81 an seiner der Grundplatte 20 zugewandten Seite mit einem mit einem Sitz 201 der Grundplatte 20 in der Fixierlage 81c (Fig. 7B) zusammenwirkenden Konus 81b (Fig. 7A) versehen.

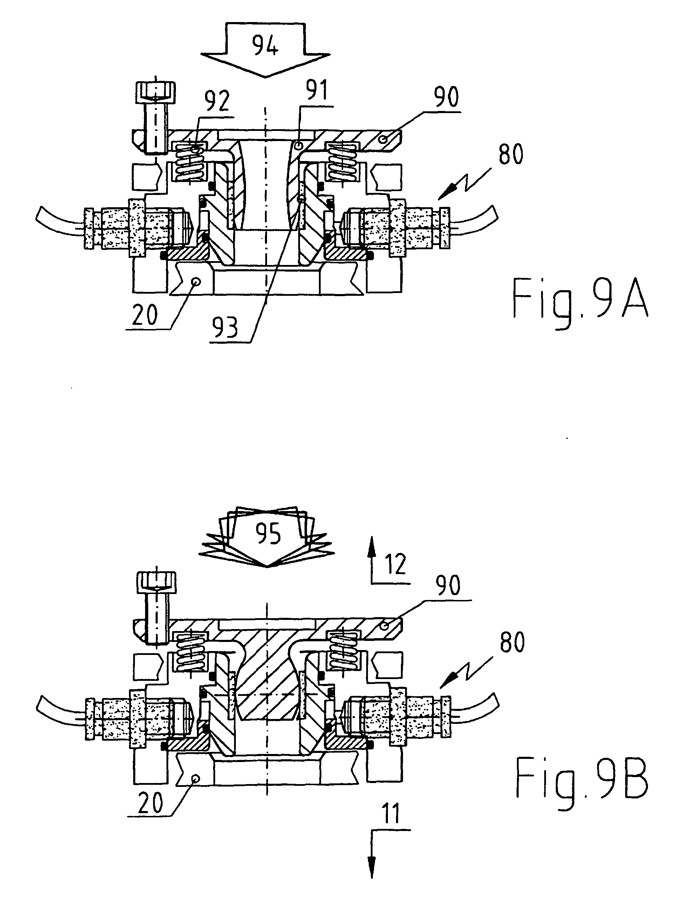

Es ist zwischen der Positioniereinrichtung 11 und der Fixiereinrichtung 80 eine mit Abstand von dieser angeordnete Zusatzausgleichplatte 90 (Fig. 9) vorgesehen, die in Richtung auf die Fixiereinrichtung 80 zu mittels der Kraft zumindest einer Feder 92 bewegbar ist. Zur zusätzlichen Führung der Zusatzausgleichplatte 90 ist diese mit einem vorspringenden Führungszapfen 91 versehen, der an dem Innenmantel des Kolbens 81, ggf. in einer gesonderten Führungsbuchse 93 axial gemäss Richtungspfeil 94 verschiebbar geführt (Fig. 9A, Fig. 9B). Für eine zusätzliche angulare Bewegung gemäss Richtungspfeil 95 bei einem Winkelversatz ist der vorspringende Führungszapfen 91 der Zusatzausgleichplatte 90 an seiner Aussenseite zumindest bereichsweise kalottenförmig ausgebildet ist (Fig. 9B).

## Patentansprüche

1. Ausgleichselement (10), das eine mittels einer Positioniereinrichtung (11) ausrichtbare Grundplatte (20) sowie eine dazu parallel geführte Anbauplatte (60) für den Anbau von Geräten (12) aufweist, zum selbsttätigen Ausgleich von Ungenauigkeiten bei der Positionierung des Ausgleichselements (10) innerhalb der X-Y-Ebene der Anbauplatte (60) in X- sowie in der dazu rechtwinklig verlaufenden Y-Richtung ohne Winkelversatz, wobei eine Zwischenplatte (40) bezüglich der Grundplatte (20) in sowohl zu der X- als auch zu der Y-Richtung rechtwinkliger (positiver) Z-Richtung von dieser Grundplatte (20) beabstandet angeordnet und über ein Paar zueinander paralleler X-Führungsplatten (30) in X-Richtung geführt ist, wobei die Zwischenplatte (40) mit der Anbauplatte (60) über ein Paar voneinander beabstandeter, zueinander paralleler Y-Führungsplatten (50) in Y-Richtung geführt ist, wobei die X-Führungsplatten (30) bezüglich der Grundplatte (20) und die Y-Führungsplatten (50) bezüglich der Anbauplatte (60) jeweils mittels Federkraft in dazu (20 bzw. 60) rechtwinkliger Ausrichtung als Grundstellung ohne Ausgleich in X-bzw. in Y-Richtung gehalten sind, **dadurch gekennzeichnet, dass** die Zwischenplatte (40) von der Grundplatte (20) in positiver Z-Richtung und die Anbauplatte (60) bezüglich der Zwischenplatte in negativer Z-Richtung benachbart, jedoch mit Abstand zu der Grundplatte (60) angeordnet ist, dass die Zwischenplatte (20) eine Öffnung aufweist und dass bis zu dieser eine auf der der Zwischenplatte (40) zugewandten Seite der Anbauplatte (60) festgelegte Verlängerung reicht.

2. Ausgleichselement nach Anspruch 1, **dadurch gekennzeichnet, dass** die Verlängerung der Anbauplatte (60) durch die Öffnung der Zwischenplatte (40) hindurch reicht.

3. Ausgleichselement nach Anspruch 1 oder 2, **dadurch gekennzeichnet, dass** die Verlängerung als Hohlzylinder (61) ausgebildet ist.

4. Ausgleichselement nach Anspruch 1, **dadurch gekennzeichnet, dass** die Anbauplatte (60) und/oder die Grundplattte (20) mit Öffnungen (62 bzw. 21) versehen sind.

## Claims

1. A compliance element (10), which provides a baseplate (20) capable of being aligned by means of a positioning device (11) and, guided parallel to the former, an attachment plate (60) for the attachment of devices (12), for the automatic balancing of inaccuracies in the positioning of the compliance element (10) within the X-Y plane of the attachment plate (60) in the X-direction and in the Y-direction extending at right angles to the latter without angular offset, wherein an intermediate plate (40) is arranged relative to the baseplate (20) in the (positive) Z-direction at right angles both to the X- and also to the Y-direction with a spacing distance from this baseplate (20) and is guided in the X-direction via a pair of mutually parallel X-guide plates (30), wherein the intermediate plate (40) with the attachment plate (60) is guided in the Y-direction via a pair of mutually spaced, mutually parallel Y-guide plates (50), wherein the X-guide plates (30) relative to the baseplate (20) and the Y-guide plates (50) relative to the attachment plate (60) are held in each case by spring loading in an orientation at right angles to the latter (20 and respectively 60) as a basic position without balancing in the X- or Y-direction,
**characterised in that**
the intermediate plate (40) is arranged adjacent to the base plate (20) in the positive Z-direction, and the attachment plate (60) is arranged adjacent to the intermediate plate in the negative Z-direction, but with a spacing distance relative to the baseplate (60) [??],
that the intermediate plate (20) [??] provides an aperture and that an extension mounted on the side of the attachment plate (60) facing away from the intermediate plate (40) extends up to the latter.

2. The compliance element according to claim 1,
**characterised in that**
the extension of the attachment plate (60) extends through the aperture of the intermediate plate (40).

3. The compliance element according to claim 1 or 2,
**characterised in that**
the extension is formed as a hollow cylinder (61).

4. The compliance element according to claim 1,
**characterised in that**
the attachment plate (60) and/or the baseplate (20) are provided with apertures (62 and respectively 21).

## Revendications

1. Dispositif de compensation (10), qui comporte une plaque de base (20), propre à être alignée au moyen d'un dispositif de positionnement (11), ainsi qu'une plaque d'assemblage (60) guidée parallèlement à ladite plaque de base pour l'assemblage à des appareils (12), destiné à la compensation automatique des inexactitudes dans le positionnement du dispositif de compensation (10) à l'intérieur du plan X-Y de la plaque d'assemblage (60) dans la direction X, ainsi que dans la direction Y orientée perpendiculairement à cette dernière, sans décalage angulaire, sachant qu'une plaque intermédiaire (40) est disposée par rapport à la plaque de base (20) dans la direction Z (positive), perpendiculaire à la direction X et à la direction Y, en étant située à distance de ladite plaque de base (20) et est guidée dans la direction X par l'intermédiaire d'une paire de plaques de guidage en X (30) parallèles entre elles, la plaque intermédiaire (40) étant guidée avec la plaque d'assemblage (60) dans la direction Y par l'intermédiaire d'une paire de plaques de guidage en Y (50) situées à distance l'une de l'autre et parallèlement entre elles, les plaques de guidage en X (30) par rapport à la plaque de base (20) et les plaques de guidage en Y (50) par rapport à la plaque d'assemblage (60) étant maintenues respectivement par une force de ressort dans une orientation perpendiculaire auxdites plaques (20 et 60) formant la position de base sans compensation dans la direction X et la direction Y, **caractérisé en ce que** la plaque intermédiaire (40) est disposée au voisinage de la plaque de base (20) dans la direction Z positive et la plaque d'assemblage (60) est disposée au voisinage de la plaque intermédiaire dans la direction Z négative, néanmoins à distance de la plaque de base (20), **en ce que** la plaque intermédiaire (20) comporte une ouverture et **en ce qu'**une rallonge, fixée sur le côté de la plaque d'assemblage (60), orienté vers la plaque intermédiaire (40), s'étend jusqu'à ladite ouverture.

2. Dispositif de compensation selon la revendication 1, **caractérisé en ce que** la rallonge de la plaque d'assemblage (60) s'engage à travers l'ouverture de la plaque intermédiaire (40).

3. Dispositif de compensation selon la revendication 1 ou 2, **caractérisé en ce que** la rallonge est réalisée sous la forme d'un cylindre creux (61).

4. Dispositif de compensation selon la revendication 1, **caractérisé en ce que** la plaque d'assemblage (60) et/ou la plaque de base (20) sont munies d'ouvertures (62 et respectivement 21).
